(19) Europäisches Patentamt / European Patent Office / Office européen des brevets

(11) **EP 2 563 078 B1**

(12) **EUROPEAN PATENT SPECIFICATION**

(45) Date of publication and mention
of the grant of the patent:
**07.05.2014 Bulletin 2014/19**

(51) Int Cl.:
*H04W 52/14* (2009.01)    *H04W 52/24* (2009.01)

(21) Application number: **11360040.7**

(22) Date of filing: **22.08.2011**

(54) **Small Cell Base Station Control**

Steuerung einer kleinzelligen Basisstation

Contrôle d'une station de base à petite cellule

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.02.2013 Bulletin 2013/09**

(73) Proprietor: **Alcatel Lucent
75007 Paris (FR)**

(72) Inventor: **Ng, Man Hung
Swindon
Wiltshire SN25 2JS (GB)**

(74) Representative: **Sarup, David Alexander
Alcatel-Lucent Telecom Ltd
Intellectual Property Business Group
Christchurch Way
Greenwich
London SE10 0AG (GB)**

(56) References cited:
**EP-A1- 1 895 714    WO-A1-2010/122512
WO-A1-2011/057152**

• **PICOCHIP: "eICIC Power Setting for Femto to
Macro", 3GPP DRAFT; R4-111704, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE, vol. RAN WG4, no. Shanghai,
China; 20110411, 6 April 2011 (2011-04-06),
XP050501744, [retrieved on 2011-04-06]**

**Description**

FIELD OF THE INVENTION

The present invention relates to a method of controlling a small cell base station of a wireless telecommunication network, a small cell base station and a computer program product.

BACKGROUND

Wireless telecommunications networks are known. In a cellular system, radio coverage is provided by areas known as cells. A base station is located in each cell to provide the radio coverage. Traditional base stations provide coverage in relatively large geographical areas and the cells are often referred to as macro cells. It is possible to provide smaller sized cells within the macro cell. Such smaller sized cells are sometimes referred to as micro cells, femto cells and pico cells, as defined by Section 4.2 of 3GPP TS 36.104 v 10.3.0. A wireless telecommunications network comprised of different sized cells is known as a heterogeneous wireless telecommunications network. One way to establish such a small cell is to provide a small cell base station, such as a home cell or femto base station that provides coverage, having a relatively limited range, typically within the coverage area of a larger cell. The transmission power of a small cell base station is relatively low and, hence, each small cell provides a small coverage area compared with that of a macro cell and covers, for example, an office or a home.

Small cell base stations are typically intended to provide support for users belonging to a particular home or office. Accordingly, small cell base stations may be private access or may be public access. In a small cell base station that provides private access, access is registered only to registered users, for example family members or particular groups of employees. In small base stations which are public access, other users may use the small cell base station, typically subject to certain restrictions to protect the quality of service received by preferred users.

Such small cells are typically provided where the communications coverage provided by the overlying macro cell is poor or where a user wishes to use an alternative communications link provided locally, by the small cell base station, to communicate with the core network. Such a situation might arise where, for example, a user has a pre-existing communications link and the user wishes to use that link in preference to that provided by the macro cell network provider to communicate with the core network. These small cells, therefore, provide superior cellular coverage in residential, enterprise or hot-spot outdoor environments. Due to the relatively small radio coverage area provided by small cell base stations, the energy consumption by each small cell base station is relatively low, due to the shorter distances between the transmitter-receiver pair of the user equipment and the small cell base station.

In a typical small cell base station, a broadband Internet protocol connection is used as "back haul" for connecting to the core network. One type of broadband Internet protocol connection is a Digital Subscriber Line (DSL). The DSL connects a DSL transmitter-receiver "transceiver" of the small cell base station to the core network. The DSL allows voice calls and other services provided by the small cell base station to be supported. The small cell base station also includes a radio frequency (RF) transceiver connected to one or more antennas for wireless communications with the user equipment.

Although deploying such small cell base stations can provide performance improvements to the network, such deployment can also result in unexpected consequences. Accordingly, it is desired to provide an improved technique for controlling small cell base stations.

WO2011/057152 A1 discloses transmissions by a femto cell being restricted upon detecting an access terminal in the vicinity of the femto cell communicating with a macro cell access point.

SUMMARY

According to a first aspect, there is provided a method of controlling a small cell base station of a wireless telecommunication network, the method comprising: detecting uplink transmissions between user equipment and a base station on a frequency used for downlink transmissions by the small cell base station, the downlink transmissions being transmitted with a pre-existing maximum transmission power; determining a modified maximum transmission power for downlink transmissions by the small cell base station; and applying a series of stepwise adjustments to adjust the pre-existing maximum transmission power towards the modified maximum transmission power for downlink transmissions.

The first aspect recognizes that a problem with existing techniques for controlling the maximum transmission power for downlink transmissions by a small cell base station is that network stability can be significantly downgraded. In particular, in existing techniques a small cell operated in the same geographical area using the same frequency as an overlying or neighbouring cell may cause significant interference and/or coverage holes without suitable interference mitigation techniques.

Existing interference mitigation techniques cause the small cell base station to reduce its output power when it senses an unattached user equipment transmission (that is to say uplink transmissions by user equipment communicating with other base stations). Such uplink transmissions are typically detected by using uplink signal measurements made by the small cell base station. The small cell base station then increases or decreases its maximum power output (possibly to a large extent) whenever an unattached user equipment approaches or leaves its coverage area.

Such rapid changes in output power may result in the rapid handover of user equipment between the small cell base station and other base stations. Also, the rapid change in output power can cause a rapid change in the coding rate of the small cell base station's control channels. For example, a rapid reduction in output power may lead to a rapid reduction in coverage which may result in a relatively high number of user equipment being handed over, each needing to hand over at a time when the coding rate of the control channel needs to increase due to its reduced transmission power. All of this may compound and effect the handover of the user equipment to a neighbouring or overlying base station.

Also, the first aspect recognizes that the influence of the detected uplink transmissions may be transient in nature, particularly when user equipment regularly transits through the coverage area provided by the small cell base station. Such consequential changes in the transmission power of the small cell base station may therefore need to be reversed shortly thereafter.

Accordingly, a method of controlling a small cell base station is provided. The method may comprise the step of detecting uplink transmissions between user equipment and a base station on a frequency used for downlink transmissions by the small cell base station. The downlink transmissions may be transmitted with a pre-existing or predetermined maximum transmission power. The method may comprise determining a modified maximum transmission power for downlink transmissions by the small cell base station. The method may also comprise applying a series of stepwise or consecutive adjustments to the pre-existing maximum transmission power. A series of such adjustments may be made to adjust the pre-existing maximum transmission power towards the modified maximum transmission power. Through this approach, rather than making the change in maximum transmission power in one step, the change in maximum transmission power may be made as a number of smaller changes over a longer period of time. Such an approach reduces the probability of the rapid handover of user equipment. Instead, the user equipment is more likely to be gradually handed over. This reduces the peak loading on the control channels in order to perform such handovers. Also, the change in coding rate of the control channels is decreased. By spreading the adjustments over a period of time, any changes to the maximum transmission power may be reversed, should the detected uplink transmissions be transient. It will be appreciated that this helps to improve the stability of the network. In one embodiment, the applying comprises applying a series of stepwise adjustments to the pre-existing maximum transmission power until the modified maximum transmission power for downlink transmissions by the small cell base station is reached.

In one embodiment, the applying comprises applying periodic adjustments to the pre-existing maximum transmission power over a number of time periods until the modified maximum transmission power for downlink transmissions by the small cell base station is reached. Accordingly, a number of periodic adjustments to the maximum transmission power may be performed sequentially over a number of time periods until the modified maximum transmission power is achieved. Once again, this provides for a gradual change in the maximum transmission power, spread over a number of time periods.

In one embodiment, the applying comprises applying periodic fixed adjustments to the pre-existing maximum transmission power over a number of time periods until the modified maximum transmission power for downlink transmissions by the small cell base station is reached. Accordingly, the adjustment applied to the maximum transmission power in each time period may be fixed and the same adjustment may be made each time period, with the adjustments ceasing when the modified maximum transmission power has been achieved. It will be appreciated that a nominal or preselected adjustment may be used and the number of time periods until the modified maximum transmission power is achieved may vary, depending on the total amount of adjustment to be made.

In one embodiment, the applying comprises determining an adjustment to the pre-existing maximum transmission power to be made in each of a number of time periods to achieve the modified maximum transmission power after the number of time periods and applying the adjustment to a currently adjusted maximum transmission power in each of the number of time periods. Accordingly, an adjustment to be made in each time period may be determined based on the total amount of adjustment to be made and the number of time periods selected within which to perform such an adjustment.

In one embodiment, the applying comprises determining an adjustment to the pre-existing maximum transmission power to be made in each of a number of time periods based on a window function utilising the pre-existing transmission power, the currently adjusted maximum transmission power and the modified maximum transmission power. Accordingly, a window function may be utilised to provide for an effective rolling average maximum transmission power and the window function utilised to determine an adjustment to be made in each time period.

In one embodiment, the determining the adjustment comprises determining the adjustment to the pre-existing maximum transmission power to be made in each time period based on $Pd = (Pp + Pc + Pm)/3 - Pc$, where $Pd$ is the adjustment, $Pp$ is the pre-existing maximum transmission power, $Pc$ is the currently adjusted maximum transmission power and $Pm$ is the modified maximum transmission power.

In one embodiment, the applying comprises determining an adjustment to the pre-existing maximum transmission power to be made in each time period based on an infinite impulse response filter function utilising the pre-existing transmission power, the currently adjusted maximum transmission power and the modified maximum transmission power. Accordingly, an infinite impulse response filter function may be utilised to determine the adjustment to be made in each time period.

In one embodiment, the determining the adjustment comprises determining the adjustment to the pre-existing maximum transmission power to be made in each time period based on $Pd = (1-beta)Pc + beta.Pm - Pc$, where $Pd$ is the adjustment, $Pc$ is the currently adjusted maximum transmission power and $Pm$ is the modified maximum transmission power.

In one embodiment, the modified maximum transmission power comprises a maximum transmission power for downlink transmissions by the small cell base station derivable from transmissions made by the base station. Accordingly, the modified maximum transmission power may be determined from transmissions made by the neighbouring or overlying base station.

In one embodiment, the method comprises detecting cessation of the uplink transmissions between the user equipment and a base station on the frequency used for downlink transmissions by the small cell base station. Accordingly, the termination of the uplink transmissions which caused the maximum transmission power to be adjusted may be detected.

In one embodiment, the method comprises ceasing applying the series of stepwise adjustments. Hence, when the detected uplink transmissions stop, the adjustments to the maximum transmission power may also stop. This prevents any further adjustments to the maximum transmission power being made, since the conditions which caused the adjustment to be initiated have changed. This helps to improve network stability by avoiding any further handover of user equipment and changes in the coding rate of the control channel.

In one embodiment, the method comprises recalculating the modified maximum transmission power and applying a series of stepwise adjustments to the pre-existing maximum transmission power until the modified maximum transmission power for downlink transmissions by the small cell base station is reached. Accordingly, the modified maximum transmission power may be recalculated by the small cell base station in order to provide appropriate coverage to attached user equipment. After detecting that the uplink signals have ended, previous changes to the maximum transmission power may then be reversed by adjusting the transmission power over a number of time periods in order to reverse the changes made due to the presence of the interfering uplink transmissions. Again, this helps to improve network stability by avoiding the rapid handover of user equipment and rapid changes in the coding rate of the control channel.

According to a second aspect, there is provided a small cell base station of a wireless telecommunication network, comprising: detection logic operable to detect uplink transmissions between user equipment and a base station on a frequency used for downlink transmissions by the small cell base station, the downlink transmissions being transmitted with a pre-existing maximum transmission power; determining logic operable to determine a modified maximum transmission power for downlink transmissions by the small cell base station; and adjustment logic operable to apply a series of stepwise adjustments to adjust the pre-existing maximum transmission power towards the modified maximum transmission power for downlink transmissions.

In one embodiment, the adjustment logic is operable to apply periodic adjustments to the pre-existing maximum transmission power over a number of time periods until the modified maximum transmission power for downlink transmissions by the small cell base station is reached.

In one embodiment, the adjustment logic is operable to apply periodic fixed adjustments to the pre-existing maximum transmission power over a number of time periods until the modified maximum transmission power for downlink transmissions by the small cell base station is reached.

In one embodiment, the adjustment logic is operable to determine an adjustment to the pre-existing maximum transmission power to be made in each of a number of time periods to achieve the modified maximum transmission power after the number of time periods and to apply the adjustment to a currently adjusted maximum transmission power in each of the number of time periods.

In one embodiment, the adjustment logic is operable to determine an adjustment to the pre-existing maximum transmission power to be made in each of a number of time periods based on a window function utilising the pre-existing transmission power, the currently adjusted maximum transmission power and the modified maximum transmission power.

In one embodiment, the adjustment logic is operable to determine the adjustment to the pre-existing maximum transmission power to be made in each time period based on $Pd = (Pp + Pc + Pm)/3 - Pc$, where $Pd$ is the adjustment, $Pp$ is the pre-existing maximum transmission power, $Pc$ is the currently adjusted maximum transmission power and $Pm$ is the modified maximum transmission power.

In one embodiment, the adjustment logic is operable to determine an adjustment to the pre-existing maximum transmission power to be made in each time period based on an infinite impulse response filter function utilising the pre-existing transmission power, the currently adjusted maximum transmission power and the modified maximum transmission power.

In one embodiment, the adjustment logic is operable to determine the adjustment to the pre-existing maximum transmission power to be made in each time period based on $Pd = (1-beta)Pc + beta.Pm - Pc$, where Pd is the adjustment, Pc is the currently adjusted maximum transmission power and Pm is the modified maximum transmission power.

In one embodiment, the modified maximum transmission power comprises a maximum transmission power for downlink transmissions by the small cell base station derivable from transmissions made by the base station.

In one embodiment, the detection logic is operable to detect cessation of the uplink transmissions between the user equipment and a base station on the frequency used for downlink transmissions by the small cell base station.

In one embodiment, the adjustment logic is operable to cease applying the series of stepwise adjustments.

In one embodiment, the adjustment logic is operable to recalculate the modified maximum transmission power and to apply a series of stepwise adjustments to the pre-existing maximum transmission power until the modified maximum transmission power for downlink transmissions by the small cell base station is reached.

According to a third aspect, there is provided a computer program product operable, when executed on a computer, to perform the method steps of the first aspect.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

BRIEF DESCRIPTION OF THE DRAWINGS

Embodiments of the present invention will now be described further, with reference to the accompanying drawings, in which:

Figure 1 illustrates the main components of a telecommunications network according to one embodiment;
Figure 2 illustrates the main processing steps of a small cell base station when calculating maximum transmission power according to one embodiment; and
Figure 3 illustrates an example change in maximum transmission power.

DESCRIPTION OF THE EMBODIMENTS

Overview

Techniques are provided to prevent large and rapid changes in the output power of a small cell base station. Instead, when a need to change output power is identified, the change is spread or distributed over a longer period of time. This helps to improve network stability by preventing rapid handover of user equipment that may otherwise occur due to such large and rapid changes in the output power. This also enables any identified change in output power to be reversed should the cause of the change cease to exist.

Example Network Deployment

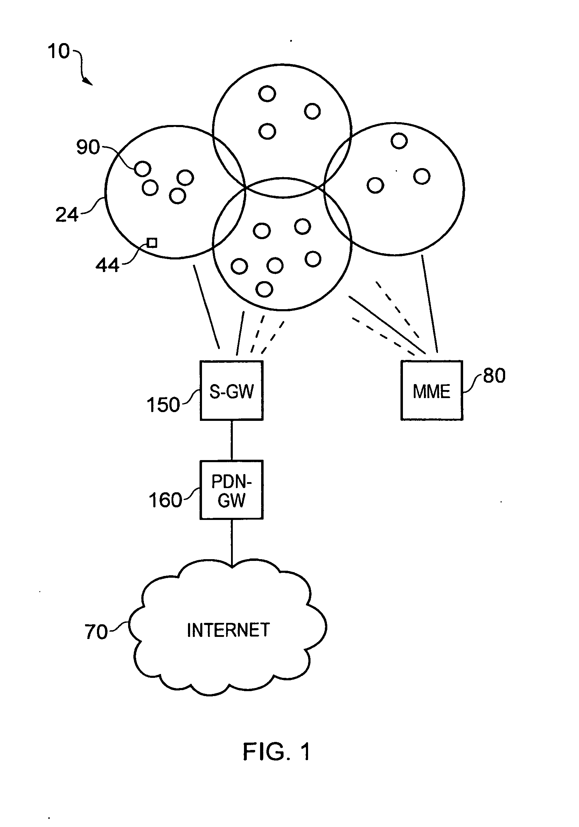

Figure 1 illustrates a wireless communication network, generally 10, according to one embodiment. User equipment 44 roam through the wireless communication network 10. Base stations are provided which support respective macro cells 24. A number of such base stations are provided, which are distributed geographically in order to provide a wide area of coverage to the user equipment 44. When user equipment 44 is within a macro cell 24 supported by the base station then communications may be established between the user equipment 44 and the base station over an associated radio link. Each base station typically supports a number of sectors. Typically, a different antenna within a base station supports an associated sector. Accordingly, each base station has multiple antennas and signals sent through the different antennas are electronically weighted to provide a sectorised approach. Of course, it will be appreciated that Figure 1 illustrates a small subset of the total number of user equipment and base stations that may be present in a typical communications system.

The wireless communication network 10 is managed by core network nodes. In this long term evolution (LTE) example, a serving gateway S-GW 150, a Packet Data Network Gateway PDN-GW 160 are coupled with the Internet 70 and provide data to and from base stations within the network. A Mobility Management Entity MME 80 provides a control path with the base stations within the network.

The MME 80 maintains a neighbour list which includes information about the geographical relationship between cells supported by base stations. In addition, the MME 80 maintains location information which provides information on the location of the user equipment within the wireless communications network 10.

Small cell base stations are provided, each of which provides a small cell 90 in the vicinity of a building within which the associated small cell base station is installed. The small cells 90 are typically provided within an overlying or underlying macro cell 24. The small cells 90 provide local communications coverage for a user in the vicinity of those buildings. A handover or camping event is initiated between a base station and a small cell base station when the user equipment provides a measurement report to the macro base station which indicates that the small cell base station is within range. The small cell base stations typically utilise the user's broadband Internet connection (such as ADSL, Cable, Ethernet, etc.) as a backhaul.

Small cell base stations are lower-power, lower-cost, and possibly user-deployed base stations that provide a high cellular quality of service in residential or enterprise environment. In contrast to current macro cell approaches where complex and highly reliable base stations are deployed to strategic locations decided by the network owner, the small cell base stations are provided locally by customers. Such small cell base stations provide local coverage in areas of the macro network where quality of service may be low. Hence, the small cell base stations provide for improved quality of service in areas which are difficult for network operators. To reduce the cost of the small cell stations and to reduce complexity and interference effects of the small cell on other user equipment within the macro cell, the transmission power of the small cell base station is relatively low in order to restrict the size of the small cell to a range of tens of metres or less. The small cell base stations have extensive auto-configuration and self-optimisation capability to enable a simple plug-and-play deployment. As such, they are designed to automatically integrate themselves into an existing macro cellular wireless network 10. In addition, some access point within the macro cellular network contains some functionality traditionally provided by the core network.

The small cell base stations are typically operational in two different modes. In the first, open access mode, a small cell base station allows access to all the users of the operator's network. In the second, a closed access mode, only registered users are able to access the small cell.

In order to provide adequate coverage to the user equipment supported by the small cell base station, the small cell base station may make downlink transmissions with a transmission power selected by the small cell base station (subject to some predetermined maximum transmission power selected to provide for harmonious network operation).

Accordingly, the small cell base station may generally be able to perform downlink transmissions at any power up to that predetermined maximum and will adjust its actual downlink transmission power based on, for example, measurement reports returned by supported user equipment.

Small cell base stations may perform downlink transmissions on frequencies used by neighbouring or overlying base stations (such as a macro base station). Hence, such downlink transmissions may cause interference to user equipment receiving downlink transmissions from a neighbouring or overlying base station. Accordingly, 3GPP TS 36.104 v 10.3.0 (the contents of which are incorporated by reference) defines in Section 6.2.5 conditions under which the maximum transmission power of the small cell base station (referred to as a home base station) is modified and what the modified maximum transmission power under those conditions should be, as will now be described in more detail below.

6.2.5 Home BS Output Power for co-channel E-UTRA protection To minimize the co-channel DL interference to non-CSG macro UEs operating in close proximity while optimizing the CSG Home BS coverage, Home BS may adjust its output power according to the requirements set out in this clause. These requirements are only applicable to Home BS. The requirements in this clause are applicable for AWGN radio propagation conditions.

For Home BS that support the requirements in this clause, the output power, Pout, of the Home BS shall be as specified in Table 6.2.5-1 under the following input conditions:

- CRS Êc, measured in dBm, is the Reference Signal Received Power per resource element present at the Home BS antenna connector received from the co-channel Wide Area BS. For CRS Êc determination, the cell-specific reference signal R0 according TS 36.211 [10] shall be used. If the Home BS can reliably detect that multiple TX antenna ports are used for transmission by the co-channel Wide Area Base Station, it may use the average in [W] of the CRS Êc on all detected TX antenna ports, including R0.
- Ioh, measured in mW, is the total received DL power, including all interference but excluding the own Home BS signal, present at the Home BS antenna connector on the Home BS operating channel.
- Iob is the uplink received interference power, including thermal noise, within one physical resource block's bandwidth of $N_{sc}^{RB}$ resource elements as defined in TS 36.214, present at the Home BS antenna connector on the Home BS operating channel.

The input conditions defined for the requirements in this section are specified at the antenna connector of the Home BS. For Home BS receivers with diversity, the requirements apply to each antenna connector separately, with the other one(s) terminated or disabled. The requirements are otherwise unchanged. For Home BS(s) without measurement capability, a reference antenna with a gain of 0 dBi is assumed for converting these power levels into field strength requirements.

Table 6.2.5-1: Home BS output power for co-channel E-UTRA channel protection

| Input Conditions | Output power, Pout |
|---|---|
| Ioh (DL) > CRS Êc + $10\log_{10}(N_{RB}^{DL} \, N_{sc}^{RB})$ + [30] dB<br>and<br>Option 1: CRS Êc $\geq$ -127 dBm or<br>Option 2: CRS Êc $\geq$ -127 dBm and Iob > [-103] dBm | $\leq$ [10] dBm |
| Ioh (DL) $\leq$ CRS Êc + $10\log_{10}(N_{RB}^{DL} \, N_{sc}^{RB})$ + [30] dB<br><br>and<br>Option 1: CRS Êc $\geq$ - -127 dBm or<br>Option 2. CRS Êc $\geq$ -127 dBm and Iob > [-103] dBm | $\leq$ max (Pmin, min (Pmax, CRS<br><br>Êc + $10\log_{10}(N_{RB}^{DL} \, N_{sc}^{RB})$ + X ))<br>[40] dB $\leq$ X $\leq$ [90] dB |
| • Note 1: Only the option supported by the Home BS shall be tested.<br>• Note 2: For CRS Êc < -127dBm, or Iob $\leq$ [-103] dBm when Option 2 is supported, the requirements in sub-clauses 6.2.1 and 6.2.2 apply.<br>• Note 3: The output power Pout is the sum of transmits power across all the antennas of the Home BS, with each transmit power measured at the respective antenna connectors.<br>• Note 4: $N_{RB}^{DL}$ is the number of downlink resource blocks in the own Home BS channel.<br>• Note 5: $N_{sc}^{RB}$ is the number of subcarriers in a resource block, $N_{sc}^{RB} = 12$.<br>• Note 6: X is a network configurable parameter.<br>• Note 7: Other input conditions and output power to be applied for network scenarios other than co-channel E-UTRA macro channel protection shall not be precluded. | |

Hence, the maximum transmission power of downlink transmissions made by a small cell base station can be derived by the small cell base station in order to provide adequate coverage to supported user equipment. However, this maximum transmission power may be adjusted according to the requirements of TS 36.104 when a user equipment uplink transmission to another base station is detected.

Power Adjustment

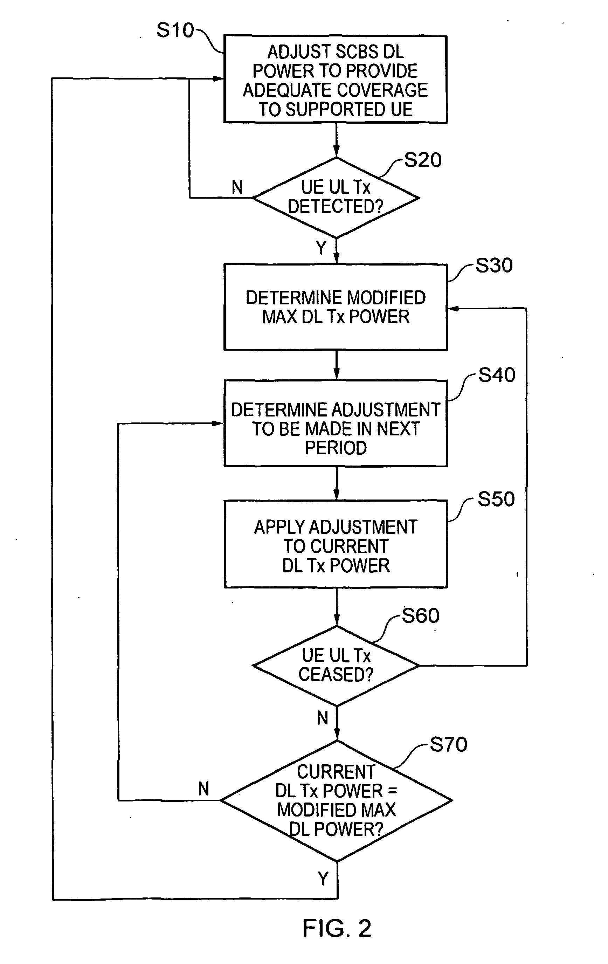

Figure 2 illustrates the main processing steps performed by the small cell base station when adjusting downlink transmission power according to one embodiment.

At step S10, the small cell base station adjusts its downlink transmission power to support user equipment. In particular, the small cell base station adjusts its downlink transmission power to be within a maximum transmission power.

At step S20, an assessment is made of whether the small cell base station has detected uplink transmissions from user equipment not attached to the small cell base station. The detection of such transmission will indicate that user equipment is nearby and is performing transmissions on frequencies also being used by the small cell base station. The transmissions made by the small cell base station on those frequencies may interfere with transmissions being made by another base station to the user equipment and may potentially disrupt communications with that user equipment.

If no such user equipment transmissions are detected then processing returns to step S10.

However, if such user equipment transmissions are detected then processing proceeds to step S30 in order to enable the small cell base station to adjust its maximum transmission power, thereby constraining the power of transmissions made by the small cell base station in order to reduce the risk of communication with the detected user equipment being disrupted.

At step S30, the small cell base station determines the maximum downlink transmission power in accordance with 3GPP TS 36.104, as mentioned above.

At step S40, the small cell base station determines an adjustment to the transmission power to be made during the next period. The following three techniques are examples that can be used to determine the adjustment to be made:

1) Separate the required change in output power (i.e. deltaP = target power - current power) into smaller fixed steps (e.g. 1 dB (or other size) step or one-tenth (or other fraction) of deltaP) and apply the power change step per fixed time interval (e.g. every 1 ms or other time period).

2) Implement a window function over the preceding, current and target power to obtain the required change in output power (e.g. deltaP = (preceding power + current power + target power)/3 - current power).

3) Implement an IIR filter function to obtain the required change in output power (e.g. deltaP = (1 - beta) x current power + beta x target power - current power; where beta is a selected scalar.

At step S50, the adjustment to the current downlink transmission power calculated at step S40 is in the time interval. In this way, only a proportion of the total adjustment required is applied in each time period. This prevents large fluctuations in the transmission power occurring rapidly, which helps to improve network stability.

At step S60, an assessment is made of whether the user equipment uplink transmissions detected at step S20 have ceased. If not, then processing proceeds to step S70.

At step S70, a determination is made of whether the current downlink transmission power matches the modified maximum downlink transmission power. If not, then processing returns to step S40 where the next adjustment to be made is calculated. If the current downlink transmission power matches the modified downlink transmission power, then processing returns to step S10 where the small cell base station may adjust its output power within the modified maximum downlink transmission power to support attached user equipment.

If it is determined at step S60 that the user equipment uplink transmissions have ceased, then a modified maximum downlink transmission power, in the absence of user equipment uplink transmissions, may be determined. This may be a maximum downlink transmission power pre-set for the small cell base station. The transmission power may then be adjusted over a number of time periods in order to restore the transmission power to that being used prior to the user equipment uplink transmissions being detected. Again, by spreading the restoration of the downlink transmission power over a number of time periods, network stability is improved.

Power Adjustment - Example

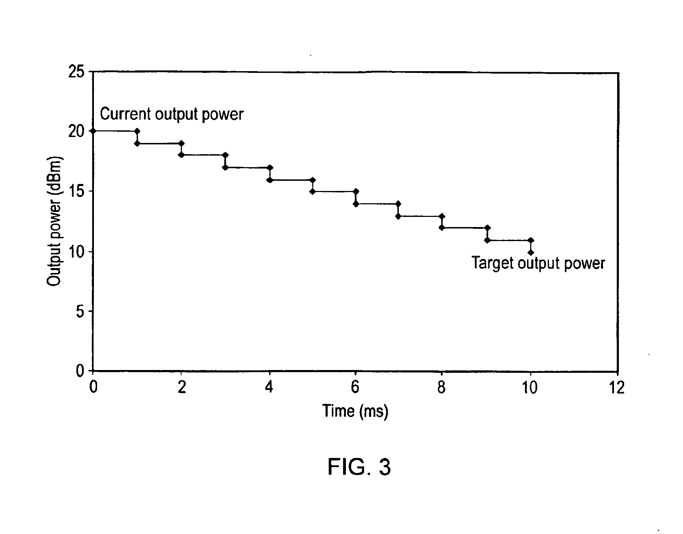

Figure 3 illustrates schematically changes in transmission power of a small cell base station. As can be seen, the current output power of the small cell base station starts at 20 dBm. This may be the maximum transmission power pre-set for the small cell base station in the absence of detected user equipment uplink transmissions. User equipment uplink transmissions are detected and the target maximum output power is determined to be 10 dBm, as specified by 3GPP TS 36.104. The required change in output power (Delta P) is determined to be 20 - 10 = 10 dBm. Instead of reducing the output power in one step, the output power is instead reduced by 1 dBm every 1 millisecond, although as mentioned above, the adjustment may be a differing amount over a differing number of time periods.

In this way, no rapid change in output power is performed which gives the opportunity for any handover caused by any reduction in the small cell output power to be spread over a period of time. Also, should the user equipment uplink transmissions be transient, then the opportunity exists to halt and reverse the changes in transmission power. In particular, the original transmission power of, in this example, 10 dBm may be restored by also applying a 1 dBm increase each millisecond or other time period until a transmission power of 20 dBm has been restored.

Accordingly, embodiments recognise that a femto-cell operated in the same geographical area using the same frequency with a macro-cell may cause significant interference and/or coverage hole to the macro-cell without suitable mitigation techniques. One of the techniques proposed in 3GPP RAN4 is for the femto-cell BS to reduce its output power when it senses that a macro user equipment is nearby (via the uplink signal measurements made by the femto-cell). This technique has been included as an optional requirements in 3GPP RAN4 TS36.104. One main issue with that technique is the network stability would be considerably degraded, as the femto-cell BS needs to increase/decrease its output power (possibly to a large extent) whenever a macro user equipment (mobile in nature) approaches/leaves its coverage area. The network stability issue is due to the possible large increase/decrease in the output power of the femto-cell base station, whenever a macro user equipment approaches/leaves its coverage area, as the femto-cell coverage will increase/decrease with its output power. Therefore, the remedy is to prevent any large increase/decrease in the output power of the femto-cell base station over a short period of time. Various techniques have been proposed above to achieve this. For example, if the current output power of the femto is 20 dBm, the target output power is 10 dBm according to the requirement in TS 36.104 when a macro user equipment uplink signal detected by the femto-cell base station. The required changes in output power (deltaP) is 20 - 10 = 10 dB. Instead of reducing the power in one go, one approach is to reduce the output power for 1 dB every 1 ms so that the stability of the network would not be impacted. Without this approach, the femto-cell network stability would be greatly degraded by the sudden change in the output power reduction technique using the user equipment uplink signal measurements. This approach covers a board range of remedies aiming to prevent the sudden and large change in femto-cell output power.

A person of skill in the art would readily recognise that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and nonvolatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

## Claims

1. A method of controlling a small cell base station of a wireless telecommunication network, said method comprising:

   detecting uplink transmissions between user equipment and a base station on a frequency used for downlink transmissions by said small cell base station, said downlink transmissions being transmitted with a pre-existing maximum transmission power;
   determining a modified maximum transmission power for downlink transmissions by said small cell base station; and
   applying a series of stepwise adjustments to adjust said pre-existing maximum transmission power towards said modified maximum transmission power for downlink transmissions.

2. The method of claim 1, wherein said applying comprises applying periodic adjustments to said pre-existing maximum transmission power over a number of time periods until said modified maximum transmission power for downlink transmissions by said small cell base station is reached.

3. The method of claim 1 or 2, wherein said applying comprises applying periodic fixed adjustments to said pre-existing maximum transmission power over a number of time periods until said modified maximum transmission power for downlink transmissions by said small cell base station is reached.

4. The method of any preceding claim, wherein said applying comprises determining an adjustment to said pre-existing maximum transmission power to be made in each of a number of time periods to achieve said modified maximum transmission power after said number of time periods and applying said adjustment to a currently adjusted maximum transmission power in each of said number of time periods.

**5.** The method of any preceding claim, wherein said applying comprises determining an adjustment to said pre-existing maximum transmission power to be made in each of a number of time periods based on a window function utilising said pre-existing transmission power, said currently adjusted maximum transmission power and said modified maximum transmission power.

**6.** The method of claim 5, wherein said determining said adjustment comprises determining said adjustment to said pre-existing maximum transmission power to be made in each time period based on Pd = (Pp + Pc + Pm)/3 - Pc, where Pd is said adjustment, Pp is said pre-existing maximum transmission power, Pc is said currently adjusted maximum transmission power and Pm is said modified maximum transmission power.

**7.** The method of any one of claims 1 to 4, wherein said applying comprises determining an adjustment to said pre-existing maximum transmission power to be made in each time period based on an infinite impulse response filter function utilising said pre-existing transmission power, said currently adjusted maximum transmission power and said modified maximum transmission power.

**8.** The method of claim 7, wherein said determining said adjustment comprises determining said adjustment to said pre-existing maximum transmission power to be made in each time period based on Pd = (1-beta)Pc + beta.Pm - Pc, where Pd is said adjustment, Pc is said currently adjusted maximum transmission power and Pm is said modified maximum transmission power.

**9.** The method of any preceding claim, wherein said modified maximum transmission power comprises a maximum transmission power for downlink transmissions by said small cell base station derivable from transmissions made by said base station.

**10.** The method of any preceding claim, comprising detecting cessation of said uplink transmissions between said user equipment and a base station on said frequency used for downlink transmissions by said small cell base station.

**11.** The method of claim 10, comprising ceasing applying said series of stepwise adjustments.

**12.** The method of claim 10 or 11, comprising recalculating said modified maximum transmission power and applying a series of stepwise adjustments to said pre-existing maximum transmission power until said modified maximum transmission power for downlink transmissions by said small cell base station is reached.

**13.** A small cell base station of a wireless telecommunication network, comprising:

detection logic operable to detect uplink transmissions between user equipment and a base station on a frequency used for downlink transmissions by said small cell base station, said downlink transmissions being transmitted with a pre-existing maximum transmission power;
determining logic operable to determine a modified maximum transmission power for downlink transmissions by said small cell base station; and
adjustment logic operable to apply a series of stepwise adjustments to adjust said pre-existing maximum transmission power towards said modified maximum transmission power for downlink transmissions.

**14.** A computer program product operable, when executed on a computer, to perform the method of any one of claims 1 to 12.

**Patentansprüche**

**1.** Verfahren zur Steuerung einer kleinzelligen Basisstation eines drahtlosen Telekommunikationsnetzwerks, wobei das besagte Verfahren umfasst:

Detektieren von Uplink-Übertragungen zwischen einem Benutzerendgerät und einer Basisstation auf einer von der besagten kleinzelligen Basisstation für Downlink-Übertragungen benutzten Frequenz, wobei die besagten Downlink-Übertragungen mit einer gegebenen maximalen Sendeleistung übertragen werden;
Ermitteln einer geänderten maximalen Sendeleistung für Downlink-Übertragungen durch die besagte kleinzellige Basisstation; und
Anwenden einer Reihe von schrittweisen Anpassungen, um die besagte gegebene maximale Sendeleistung an die besagte geänderte maximale Sendeleistung für Downlink-Übertragungen anzupassen.

**2.** Verfahren nach Anspruch 1, wobei das besagte Anwenden das Anwenden von periodischen Anpassungen auf die besagte gegebene maximale Sendeleistung über eine Anzahl von Zeitabschnitten, bis die besagte geänderte maximale Sendeleistung für Downlink-Übertragungen durch die besagte kleinzellige Basisstation erreicht wird. umfasst.

**3.** Verfahren nach Anspruch 1 oder 2, wobei das besagte Anwenden das Anwenden von periodischen festen Anpassungen auf die besagte gegebene maximale Übertragungsleistung über eine Anzahl von Zeitabschnitten, bis die besagte geänderte maximale Sendeleistung für Downlink-Übertragungen durch die besagte kleinzellige Basisstation erreicht wird, umfasst.

**4.** Verfahren nach einem beliebigen der vorstehenden Ansprüche, wobei das besagte Anwenden das Ermitteln einer in einer jeden einer Anzahl von Zeitspannen durchzuführenden Anpassung an die besagte gegebene maximale Sendeleistung, um die besagte geänderte maximale Sendeleistung nach der besagten Anzahl von Zeitabschnitten zu erreichen, und das Anwenden der besagten Anpassung auf eine aktuell angepasste maximale Sendeleistung in einem jeden der besagten Anzahl von Zeitabschnitten umfasst.

**5.** Verfahren nach einem beliebigen der vorstehenden Ansprüche, wobei das besagte Anwenden das Ermitteln einer in einer jeden einer Anzahl von Zeitspannen durchzuführenden Anpassung an die besagte gegebene maximale Sendeleistung auf der Basis einer Fensterfunktion unter Verwendung der besagten gegebenen Sendeleistung, der besagten aktuell angepassten maximalen Sendeleistung und der besagten geänderten maximalen Sendeleistung umfasst.

**6.** Verfahren nach Anspruch 5, wobei das besagte Ermitteln der besagten Anpassung das Ermitteln der besagten in jeder Zeitspanne durchzuführenden Anpassung an die besagte gegebene maximale Sendeleistung auf der Basis von $Pd = (Pp + Pc + Pm)/3-Pc$ umfasst, wobei Pd die besagte Anpassung darstellt, Pp die besagte gegebene maximale Sendeleistung darstellt, Pc die besagte aktuell angepasste maximale Sendeleistung darstellt und Pm die besagte geänderte maximale Sendeleistung darstellt.

**7.** Verfahren nach einem beliebigen der Ansprüche 1 bis 4, wobei das besagte Anwenden das Ermitteln einer in jeder Zeitspanne durchzuführenden Anpassung an die besagte gegebene maximale Sendeleistung auf der Basis einer Filterfunktion mit unendlicher Impulsantwort unter Verwendung der besagten gegebenen Sendeleistung, der besagten aktuell angepassten maximalen Sendeleistung und der besagten geänderten maximalen Sendeleistung umfasst.

**8.** Verfahren nach Anspruch 7, wobei das besagte Ermitteln der besagten Anpassung das Ermitteln der besagten in jeder Zeitspanne durchzuführenden Anpassung an die besagte gegebene maximale Sendeleistung auf der Basis von $Pd = (1-beta)Pc + beta.Pm-Pc$ umfasst, wobei Pd die besagte Anpassung darstellt, Pc die besagte aktuell angepasste maximale Sendeleistung darstellt und Pm die besagte geänderte maximale Sendeleistung darstellt.

**9.** Verfahren nach einem beliebigen der vorstehenden Ansprüche, wobei die besagte geänderte maximale Sendeleistung eine maximale Sendeleistung für Downlink-Übertragungen durch die besagte kleinzellige Basisstation, ableitbar von der besagten Basisstation durchgeführten Übertragungen, umfasst.

**10.** Verfahren nach einem beliebigen der vorstehenden Ansprüche, umfassend das Detektieren des Einstellens der besagten Uplink-Übertragungen zwischen dem besagten Benutzerendgerät und einer Basisstation auf der besagten von der besagten kleinzelligen Basisstation für Downlink-Übertragungen benutzten Frequenz.

**11.** Verfahren nach Anspruch 10, umfassend das Einstellen der Anwendung der besagten Reihe von schrittweisen Anpassungen.

**12.** Verfahren nach Anspruch 10 oder 11, umfassend das Neuberechnen der besagten geänderten maximalen Übertragungsleistung und das Anwenden einer Reihe von schrittweisen Anpassungen an die besagte gegebene maximale Sendeleistung, bis die besagte geänderte maximale Sendeleistung für Downlink-Übertragungen durch die besagte kleinzellige Basisstation erreicht wird.

**13.** Kleinzellige Basisstation eines drahtlosen Telekommunikationsnetzwerks, umfassend:

Detektionslogik, betreibbar zum Detektieren von Uplink-Übertragungen zwischen einem Benutzerendgerät und einer Basisstation auf einer von der besagten kleinzelligen Basisstation für Downlink-Übertragungen benutzten Frequenz, wobei die besagten Downlink-Übertragungen mit einer gegebenen maximalen Sendeleistung übertragen werden;

Ermittlungslogik, betreibbar zum Ermitteln einer geänderten maximalen Sendeleistung für Downlink-Übertragungen durch die besagte kleinzellige Basisstation; und

Anpassungslogik, betreibbar für das Anwenden einer Reihe von schrittweisen Anpassungen, um die besagte gegebene maximale Sendeleistung an die besagte geänderte maximale Sendeleistung für Downlink-Übertragungen anzupassen.

**14.** Computerprogramm-Produkt, betreibbar für das Durchführen des Verfahrens eines beliebigen der Ansprüche 1 bis 12, wenn es auf einem Computer ausgeführt wird.


**Revendications**

**1.** Procédé de contrôle d'une station de base de petite cellule d'un réseau de télécommunication sans fil, ledit procédé comprenant les étapes suivantes :

détecter des transmissions de liaison montante entre un équipement utilisateur et une station de base sur une fréquence utilisée pour des transmissions de liaison descendante par ladite station de base de petite cellule, lesdites transmissions de liaison descendante étant transmises avec une puissance de transmission maximum préexistante ;

déterminer une puissance de transmission maximum modifiée pour des transmissions de liaison descendante par ladite station de base de petite cellule ; et

appliquer une série de réglages graduels pour régler ladite puissance de transmission maximum préexistante sur ladite puissance de transmission maximum modifiée pour des transmissions de liaison descendante.

**2.** Procédé selon la revendication 1, dans lequel ladite application comprend l'application de réglages périodiques sur ladite puissance de transmission maximum préexistante durant plusieurs périodes jusqu'à ce que ladite puissance de transmission maximum modifiée pour des transmissions de liaison descendante par ladite station de base de petite cellule soit atteinte.

**3.** Procédé selon la revendication 1 ou 2, dans lequel ladite application comprend l'application de réglages fixes sur ladite puissance de transmission maximum préexistante durant plusieurs périodes jusqu'à ce que ladite puissance de transmission maximum modifiée pour des transmissions de liaison descendante par ladite station de base de petite cellule soit atteinte.

**4.** Procédé selon l'une quelconque des revendications précédentes, dans lequel ladite application comprend la détermination d'un réglage sur ladite puissance de transmission maximum préexistante à effectuer durant chaque période parmi plusieurs périodes pour obtenir ladite puissance de transmission maximum modifiée après lesdites plusieurs périodes et l'application dudit réglage sur une puissance de transmission maximum réglée actuellement durant chaque période parmi lesdites plusieurs périodes.

**5.** Procédé selon l'une quelconque des revendications précédentes, dans lequel ladite application comprend la détermination d'un réglage sur ladite puissance de transmission maximum préexistante à effectuer durant chaque période parmi plusieurs périodes sur la base d'une fonction fenêtre en utilisant ladite puissance de transmission préexistante, ladite puissance de transmission maximum réglée actuellement et ladite puissance de transmission maximum modifiée.

**6.** Procédé selon la revendication 5, dans lequel ladite détermination dudit réglage comprend la détermination dudit réglage sur ladite puissance de transmission maximum préexistante à effectuer durant chaque période sur la base de $Pd = (Pp + Pc + Pm)/3 - Pc$, où $Pd$ est ledit réglage, $Pp$ est ladite puissance de transmission maximum préexistante, $Pc$ est ladite puissance de transmission maximum réglée actuellement et $Pm$ est ladite puissance de transmission maximum modifiée.

**7.** Procédé selon l'une quelconque des revendications 1 à 4, dans lequel ladite application comprend la détermination d'un réglage sur ladite puissance de transmission maximum préexistante à effectuer durant chaque période sur la base d'une fonction de filtre à réponse impulsionnelle infinie en utilisant ladite puissance de transmission préexistante, ladite puissance de transmission maximum réglée actuellement et ladite puissance de transmission maximum modifiée.

**8.** Procédé selon la revendication 7, dans lequel ladite détermination dudit réglage comprend la détermination dudit réglage sur ladite puissance de transmission maximum préexistante à effectuer durant chaque période sur la base de Pd = (1-beta)Pc + beta.Pm - Pc, où Pd est ledit réglage, Pc est ladite puissance de transmission maximum réglée actuellement et Pm est ladite puissance de transmission maximum modifiée.

**9.** Procédé selon l'une quelconque des revendications précédentes, dans lequel ladite puissance de transmission maximum modifiée comprend une puissance de transmission maximum pour des transmissions de liaison descendante par ladite station de base de petite cellule pouvant être dérivée de transmissions exécutées par ladite station de base.

**10.** Procédé selon l'une quelconque des revendications précédentes, comprenant la détection de l'arrêt desdites transmissions de liaison montante entre ledit équipement utilisateur et une station de base sur ladite fréquence utilisée pour des transmissions de liaison descendante par ladite station de base de petite cellule.

**11.** Procédé selon la revendication 10, comprenant l'arrêt de l'application de ladite série de réglages graduels.

**12.** Procédé selon la revendication 10 ou 11, comprenant le re-calcul de ladite puissance de transmission maximum modifiée et l'application d'une série de réglages graduels sur ladite puissance de transmission maximum préexistante jusqu'à ce que ladite puissance de transmission maximum modifiée pour des transmissions de liaison descendante par ladite station de base de petite cellule soit atteinte.

**13.** Station de base de petite cellule d'un réseau de télécommunication sans fil, comprenant :

une logique de détection permettant de détecter des transmissions de liaison montante entre un équipement utilisateur et une station de base sur une fréquence utilisé pour des transmissions de liaison descendante par ladite station de base de petite cellule, lesdites transmissions de liaison descendante étant transmises avec une puissance de transmission maximum préexistante ;
une logique de détermination permettant de déterminer une puissance de transmission maximum modifiée pour des transmissions de liaison descendante par ladite station de base de petite cellule ; et
une logique de réglage permettant d'appliquer une série de réglages graduels pour régler ladite puissance de transmission maximum préexistante sur ladite puissance de transmission maximum modifiée pour des transmissions de liaison descendante.

**14.** Produit de programme informatique permettant, lorsqu'il est exécuté sur un ordinateur, d'exécuter le procédé selon l'une quelconque des revendications 1 à 12.

FIG. 1

**FIG. 2**

FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011057152 A1